# EUROPEAN PATENT APPLICATION

(11) **EP 1 890 430 A1**
(43) Date of publication of application: **20.02.2008**
(21) Application number: 07253236.9
(22) Date of filing: 16.08.2007
(51) Int. Cl.: H04L 12/26

(54) **Networking hardware element to couple computer network elements and method of displaying information thereon**

(30) Priority: 17.08.2006 US 506351; 05.01.2007 US 650019
(71) Applicant: Belkin International Inc., Compton, CA 90220 (US)
(72) Inventor: Pham, Anthony, California 91770 (US); Lin, Steven, California 90703 (US); Bettino, Jonathan, California 92646 (US); Hoard, David W, Escondido, California 92025 (US); Reay, Robert W., Rochester, New York 14609 (US)
(74) Representative: Lawrence, John

(57) **Abstract**

In one embodiment, a networking hardware element (1100, 3100) capable of coupling together computer network elements (1010) includes a network diagnostic mechanism (2140) and a display (2110,3110, 5110). The display is electrically coupled to the network diagnostic mechanism and is capable of displaying network information and additional information.

## Description

### CROSS-REFERENCE TO RELATED APPLICATION

This application claims the benefit of United States Patent Application Serial No. 11/506,351, filed August 17, 2006 and United States Patent Application Serial No. 11/650,019, filed January 5, 2007.

### FIELD OF THE INVENTION

This invention relates generally to computer networks, and relates more particularly to the monitoring and management of computer networks.

### BACKGROUND OF THE INVENTION

Computer networks include a variety of elements such as computers, printers, modems, and the like. Computer networks also often include networking hardware elements, such as wireless and/or wired routers, to electrically couple the various computer network elements to each other. From time to time, however, these computer networks have performance problems. Computer network administrators or other users attempting to address such performance problems often receive information about the computer system through a display on the networking hardware elements, and/or through a user interface on the computers. Existing user interfaces vary widely with respect to the nature and the amount of interaction they allow, but none are ideal in terms of the diagnostic information and problem solving advice they provide to the user. In addition, user interfaces are often complicated and difficult for a novice user to understand and use. Accordingly, there exists a need for an improved apparatus and method to monitor and manage computer networks.

### BRIEF DESCRIPTION OF THE DRAWINGS

The invention will be better understood from a reading of the following detailed description, taken in conjunction with the accompanying figures in the drawings in which:
FIG. 1 illustrates a computer network in accordance with an embodiment of the invention;
FIG. 2 illustrates a networking hardware element from the computer network of PIG. 1 in accordance with an embodiment of the invention;
FIG. 3 illustrates a different embodiment of the networking hardware element of FIG. 2 in accordance with a different embodiment of the invention;
FIG. 4 illustrates a display of the networking hardware element of FIGs. 2 and 3 in accordance with an embodiment of the invention;
FIG. 5 illustrates different embodiment of the display of FIG. 4 in accordance with a different embodiment of the invention;
FIG. 6 illustrates a flowchart of a method for displaying a network layout map on a networking hardware element in accordance with an embodiment of the invention; and
**FIG. 7** illustrates a flowchart of a method for displaying a network setup and/or troubleshooting advice on a networking hardware element in accordance with an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "lefl," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner.

### DETAILED DESCRIPTION OF THE DRAWINGS

In one embodiment, a networking hardware element capable of coupling together computer network elements includes a network diagnostic mechanism and a display. The display is electrically coupled to the network diagnostic mechanism and is capable of displaying network information and additional information. In a different embodiment, the display is electrically coupled to the network diagnostic mechanism and is capable of displaying network information and network advice.

In some examples, the networking hardware element is selected from the group consisting essentially of (a) a router; (b) a hub; (c) a switch; (d) a wireless network access point; and (e) a wireless networking card.

In various examples, the electronic display is iconographic. In the same or different examples, the electronic display includes an LCD.

In many examples, the network information is selected from the group consisting essentially of: (a) a network layout map; (b) a network security indicator (c) a service set identifier; (d) a guest service set identifier, (d) a wired network speed; (e) a wireless network speed; (t) a wireless channel; (g) a network security standard; (h) an unauthorized user alarm; (i) a counter indicating a number of unauthorized user attempts; (j) an actual Internet connection speed; (k) a maximum internet connection speed; (1) a network usage time; (m) a network traffic type; (n) a network traffic load; (o) an Internet Protocol address; (p) a firewall status; and (q) a guest security password.

In some examples, the network information is selected from the group consisting essentially of: (a) a service set identifier; and (b) a guest service set identifier.

In numerous examples, the network information is selected from the group consisting essentially of: (a) a wired network speed; (b) a wireless network speed; and (c) a wireless channel.

In various examples, the network information is selected from the group consisting essentially of: (a) an unauthorized user alarm; and (b) a counter indicating a number of unauthorized user attempts.

In some examples, the network information is selected from the group consisting essentially of: (a) an actual Internet connection speed; and (b) a maximum Internet connection speed

In numerous examples, the network information is selected from the group consisting essentially of: (a) a network usage time; (b) a network traffic type; and (c) a network traffic load.

In various examples, the network information is selected from the group consisting essentially of: (a) an Internet Protocol address; (b) a firewall status; and (c) a guest security password

In some examples, the additional information is selected from the group consisting essentially of (a) a time; (b) a date; (c) a calendar; (d) a weather forecast; (e) a news report; (f) a stock quote; (g) a sports score; (h) an email ticker; (i) an instant messenger ticker; (j) a radio channel; (k) information regarding a song played on the radio channel; (I) an available storage space on a memory device; (m) a used storage space on the memory device; and (n) a total storage space on the memory device.

In other examples, the additional information is selected from the group consisting essentially of: (a) a time; (b) a date; and (c) a calendar. In still further examples, the additional information is selected from the group consisting essentially of: (a) a weather forecast; (b) a news report; (c) a stock quote; and (d) a sports score. In yet another example, the additional information is selected from the group consisting essentially of: (a) an email ticker; and (b) an instant messenger ticker.

In various examples, the networking hardware element can further include speakers. In this example, the additional information can be selected from the group consisting essentially of:
(a) a radio channel; and (b) information regarding a song played from the radio channel and on the speakers.

In some examples, the networking hardware element can further include a memory device. In this example, the additional information can be selected from the group consisting essentially of: (a) an available storage space on a memory device; (b) a used storage space on the memory device; and (c) a total storage space on the memory device.

In various examples, the electronic display is capable of displaying network setup advice-In the same or different examples, the electronic display is capable of displaying network troubleshooting advice.

In another embodiment, a networking hardware element to couple together computer network elements, includes: (a) a network diagnostic mechanism; and (b) an electronic display electrically coupled to the network diagnostic mechanism and capable of: (1) displaying network information; and (2) displaying network advice.

In some examples, the networking hardware element can further include: (a) a removable label located over the electronic display, and (b) network setup advice located on the removable labeL In this example, the network advice can include additional network setup advice. In the same or different example, the network setup advice is designed to be followed by a user of the networking hardware element before the user removes the removable label from the electronic display and before the user follows the additional network setup advice.

In various examples, the network advice is selected from the group consisting essentially of: (a) turning on or off a wireless local area network radio; (b) modifying a power output of the wireless local area network radio; (c) modifying an antenna configuration of the wireless local area network radio; (d) setting a quality of service by application or client; (e) minimizing noise and interference with the wireless local area network radio; (f) dedicating one or more wireless channels to one or more clients; (g) providing a security password; (h) providing a PIN for Windows Rally connection setup; (i) providing instructions for a WPS push button; (j) providing one or more technical support telephone numbers; (k) providing a troubleshooting wizard; (1) permitting handling of a Windows ConnectNow thumb drive method; and (m) providing Microsoft SideShow support.

In numerous examples, the networking hardware clement can further include a wireless local area network radio having one or more channels. In this example, the network advice is selected from the group consisting essentially of (a) turning on or off the wireless local area network radio; (b) modifying a power output of the wireless local area network radio; (c) modifying an antenna configuration of the wireless local area network radio; (d) minimizing noise and interference with the wireless local area network radio; and (e) dedicating at least one of the one or more channels to one or more clients.

In some examples, the network advice is selected from the group consisting essentially of: (a) setting quality of service by application or client; (b) a security password; (c) a PIN for Windows Rally connection setup; (d) instructions for a WPS push button; (e) handling of a Windows ConnectNow thumb drive method; and (f) Microsoft SideShow support

In a different example, the network advice is selected from the group consisting essentially of: (a) one or more technical support telephone numbers; and (b) a troubleshooting wizard.

In various examples, the networking hardware element is selected from the group consisting essentially of: (a) a router; (b) a hub; (c) a switch; (d) a wireless network access point; and (e) a wireless networking card.

In many examples, the electronic display is iconographic. In the same or different examples, the electronic display includes an LCD.

Further embodiments disclose a method of displaying information on a networking hardware element coupling together computer network elements. The method can include: (a) displaying on the networking hardware element; (1) network information; and (2) additional information.

Yet still another embodiment discloses a method of displaying information on a networking hardware element coupling together computer network elements. The method can includes: (a) displaying on the networking hardware element, (1) network information; and (2) network advice.

In further embodiment, a networking hardware element to allow computer network elements to communicate with each other, includes: (a) one or more network communication ports to couple to the computer network elements; (b) a network diagnostic mechanism coupled to the one or more network communication ports and creating an output; (c) network information based on the output; (d) network advice triggered by the output; and (e) additional information. In some examples, the additional information is based on information separate from the output.

In various examples, the networking hardware element can further include: an LCD electrically coupled to the network diagnostic mechanism to display the network information, the network advice, and the additional information.

In many examples, the networking hardware element is selected from the group consisting essentially of: (a) a router; (b) a hub; (c) a switch; (d) a wireless network access point; and (e) a wireless networking card.

In numerous examples, the networking hardware element can further include: an iconographic, electronic display electrically coupled to the network diagnostic mechanism and capable of displaying the network information, the network advice, and the additional information.

In various examples, the network information is selected from the group consisting essentially of: (a) a network layout map; (b) a network security indicator, (c) a service set identifier; (d) a guest service set identifier; (e) a wired network speed; (f) a wireless network speed; (g) a network security standard; (h) an unauthorized user alarm; (i) a counter indicating a number of unauthorized user attempts; (j) an actual Internet connection speed; (k) a maximum Internet connection speed; (1) a network usage time; (m) a network traffic type; (n) a network traffic load; (o) an Internet Protocol address; (p) a firewall status; and (q) a guest security password. In the same or different example, the additional information is selected from the group consisting essentially of (a) a time; (b) a date; (c) a calendar; (d) a weather forecast; (e) a news report; (f) a stock quote; (g) a sports score; (h) an email ticker; (i) an instant messenger ticker, (j) a radio channel; (k) information regarding a song played on the radio channel; (1) an available storage space on a memory device; (m) a used storage space on the memory device; and (n) a total storage space on the memory device. The network advice can be selected from the group consisting essentially of: (a) turning on or off a wireless local area network radio; (b) modifying a power output of the wireless local area network radio; (c) modifying an antenna configuration of the wireless local area network radio; (d) setting quality of service by application or client; (e) minimizing noise and interference with the wireless local area network radio; (f) dedicating one or more wireless channels to one or more clients; (g) providing a security password; (h) providing a PIN for Windows Rally connection setup; (i) providing instructions for a WPS push button; (j) providing one or more technical support telephone numbers; (k) providing a troubleshooting wizard; (1) permitting handling of a Windows ConnectNow thumb drive method; and (m) providing Microsoft SideShow support

In an additional example, a networking hardware element to couple together computer network elements, can inlcude: (a) a network diagnostic mechanism; and (b) an electronic display electrically coupled to the network diagnostic mechanism and capable of displaying a security password.

In some examples, the security password permits a first one of the computer network elements to log onto the networking hardware element.

In various examples, the electronic display is capable of displaying a second security password different from the security password. Moreover, the electronic display is capable of displaying simultaneously the first and second security passwords.

In many examples, the security password permits a first one of the computer network elements to log onto the networking hardware element, and the second security password permits a second one of the computer network elements to log onto the networking hardware element.

In still further embodiment, a networking hardware element to couple together computer network elements, can include: (a) a network diagnostic mechanism; and (b) an electronic display electrically coupled to the network diagnostic mechanism and capable of displaying a network speed.

In some examples, the network speed can be displayed as an analog speedometer. In other examples, the network speed can be displayed as a digital number.

In many examples, the network speed includes an actual network speed. In the same or different examples, the network speed includes a maximum network speed. The network speed can include an historical network speed.

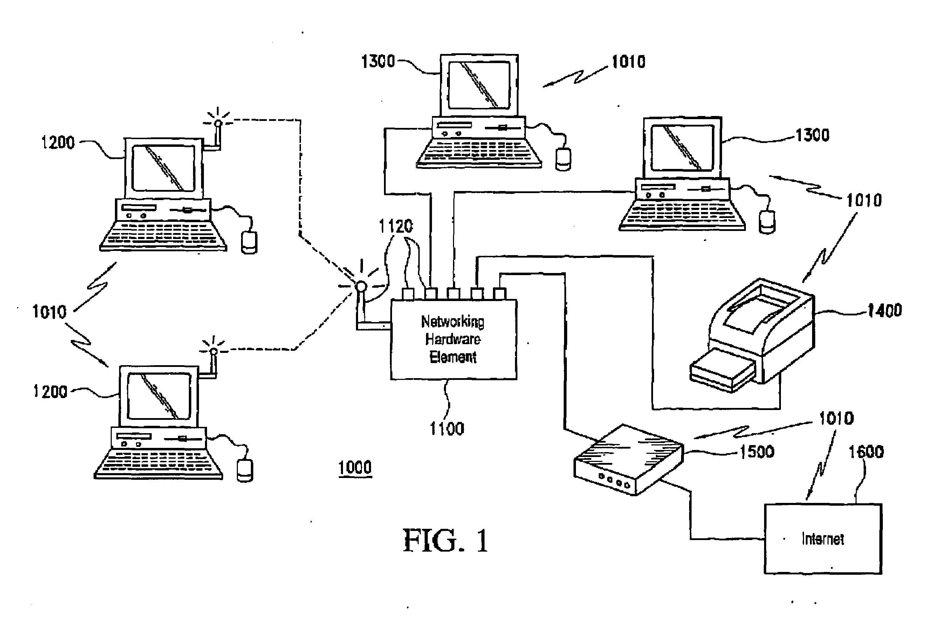

Referring now to the figures, FIG. 1 illustrates a computer network 1000. Computer network 1000 includes computer network elements. 1010 and a networking hardware element 1100. Networking hardware element 1100 couples computer network elements 1010 together and, as explained in more detail hereinafter, is capable of displaying a network layout map of computer network 1000. Networking hardware element 1100 can represent, for example, a router, a hub such as a networking hub or a universal serial bus hub, a switch, a wireless network access point, a wireless networking card, or any other device used to couple computer network elements 1010 and to route communication signals between computer network elements 1010. Networking hardware element 1100 is not a computer and is not designed for a user to directly connect a mechanical keyboard or mouse to it.

As an example, computer network elements 1010 can include at least one modem 1500, one or more wired computers 1300 connected through networking hardware element 1100 through a wired connection, one or more wireless computers 1200 connected to networking hardware element 1100 through a wireless connection, one or more printers 1400, and Internet 1600. Modem 1500 couples networking hardware element 1100 to Internet 1600. Each of computer network elements 1010 can be referred to as a client of networking hardware element 1100.

Each of computer network elements 1010 are coupled through wired or wireless connections to networking hardware element 1100 via terminals 1120 of networking hardware element 1140. Terminals 1120 can be mechanical terminals such as Universal Serial Bus (USB) ports, telephone jacks such as of the RJ-11 and RJ-14 types, Ethernet jacks such as of the RJ-45 type, or any other suitable connection mechanism to couple computer network element 1010. Terminals 1120 can also be wireless terminals, such as one or more antennae to send and receive signals in accordance to wireless communications standards like IEEE 802.11. Terminals 1120 can also be referred to as router terminals when networking hardware element 1100 is a router. Although printer 1400 and modem 1500 are illustrated in FIG. 1 to be hardwired to networking hardware element 1100, one skilled in the art will understand that either or both of printer 1400 and modem 1500 can be coupled to networking hardware element 1100 via a wireless connection.

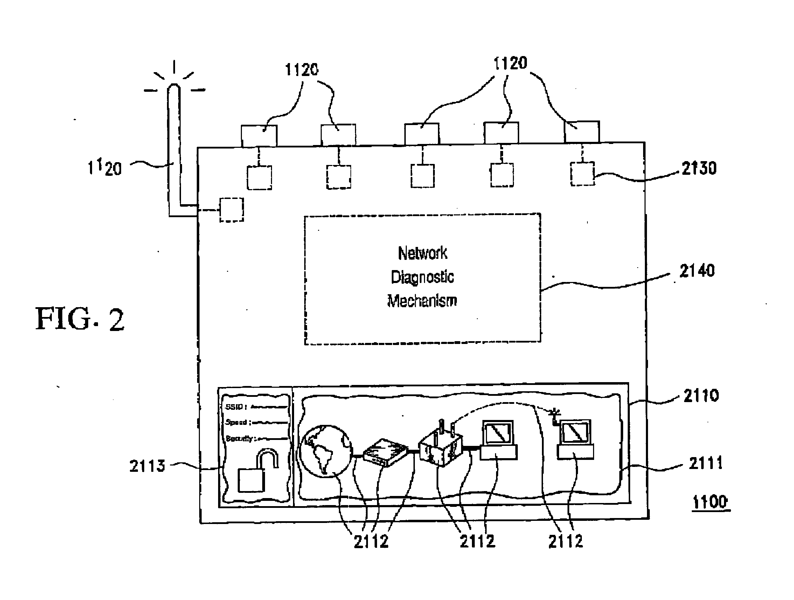

FIG. 2 illustrates networking hardware element 1100. Regardless of whether networking hardware element 1100 is a wired device, a wireless device, or both, networking hardware element 1100 comprises one or more transceivers 2130. Transceivers 2130 are capable of sending and receiving communication signals between any of computer network elements 1010 (FIG. 1) coupled to networking hardware element 1100.

Networking hardware element 1100 further comprises a network diagnostic mechanism 2140, which is capable of monitoring transceivers 2130 in order to map each of computer network elements 1010 (FIG. 1), and which is also capable of determining the connection status of each of computer network elements 1010. In some embodiments, network diagnostic mechanism 2140 can be referred to as a network mapping routine, and connection status can be referred to as a communication status. The network mapping routine/network diagnostic mechanism 2140 may be implemented for networking hardware element 1100 through software, firmware, or hardware, or through a combination of these approaches.

Networking hardware element 1100 is also capable of displaying a network layout map 2111. In some embodiments, network layout map 2111 can be referred to as a network arrangement representation. Networking hardware element 1100 also comprises a display 2110, which is capable of communicating with network diagnostic mechanism 2140 and which is also capable of displaying network layout map 2111. In one embodiment, display 2110 comprises a Liquid Crystal Display (LCD). In the same or a different embodiment, display 2110 is iconographic, denoting representations 2112 of computer network elements 1010 (FIG. 1) through icons. In the same or a different embodiment, display 2110 can also comprise Light Emitting Diode (LED) sets, comprising one or more LEDs, where the LED sets correspond to representations 2112 of computer network elements 1010. While communicating with network diagnostic mechanism 2140, display 2110 can access information, for example, about which of computer network elements 1010 are present, and about the connection status of each of computer network elements 1010. Display 2110 can then display network layout map 2111 on networking hardware element 1100, based on the information gathered from network diagnostic mechanism 2140.

Network layout map 2111 on display 2110 comprises representations 2112 of computer network elements 1010 (FIG. 1), along with an indication of the connection status for computer network elements 1010 (FIG. 1). Network layout map 2111 is arranged so as to convey information to a user about the composition of computer network 1000 through representations 2112.

In one embodiment, each of representations 2112 can represent a different one of computer network elements 1010 coupled to networking hardware element 1100 in computer network 1000. In the same or a different embodiment, one or more of representations 2112 can represent a set or group of similar ones of computer network elements 1010, as explained in more detail hereinafter.

Representations 2112 can also represent the interconnections between computer network elements 1100 and networking hardware element 1100. The connection status for each of computer network elements 1010 can also be indicated through display 2110, such as by causing the corresponding one of representations 2112 to blink and/or change colors, or by otherwise making display 2110 point to the corresponding one of representations 2112. In one example, the connection status can be indicated through one or more LED sets that correspond to particular computer network elements 1010.

In one embodiment, display 2110 is also capable of displaying a network information set 2113, which can provide users with information such as the connectivity, security, and speed of computer network 1000. In some embodiments, network information set 2113 can be referred to as a network information listing.

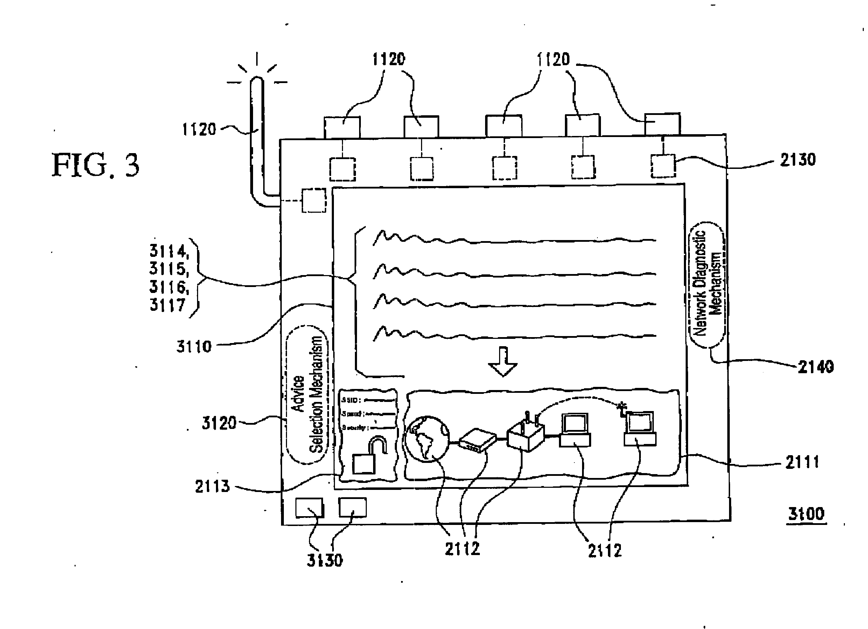

FIG. 3 illustrates a networking hardware element 3100, which is a different embodiment of networking hardware element 1100 of FIG. 2. Networking hardware element 3100 includes a display 3110. In one embodiment, display 3110 is capable of accomplishing the same tasks as display 2110 on networking hardware element 1100, but is also capable of displaying a network troubleshooting advice 3114. Network troubleshooting advice 3114 can be presented, for example, to guide and interact with a user while troubleshooting the connection status of computer network elements 1010 coupled through networking hardware element 3100.

In the same or a different embodiment, display 3110 is capable of accomplishing the same tasks as display 2110 on networking hardware clement 1100 (FIG. 2), but is also capable of displaying a network setup advice 3115. Network setup advice 3115 can be presented, for example, to interact with the user during the setup of computer network 1000 (FIG. 1) by guiding the user through the coupling of different computer network elements 1010 (FIG. 1) to networking hardware element 3110.

Networking hardware element 3100 can also include a label located over display 3110. The label can include network setup advice and can be removable from display 3110 after the user follows the advice on the label. As an example, the network setup advice on the label can include the following steps: (1) attach the stand to the router, (2) plug the electrical cord into the router and the electrical wall outlet; (3) turn on the router after plugging in the electrical cord; and (4) remove this label from the display on the router after turning on the router. After following the steps on the label, the user will see additional network setup advice displayed on display 3110. The additional network setup advice can include a welcome screen, a menu to choose a language for the remaining network setup advice, questions regarding the network, etc. Accordingly, in one embodiment, the network setup advice on the label is designed to be followed by a user of networking hardware element 3100 before the user removes the label from display 3110 and before the user follows the additional network setup advice displayed on display 3110.

In some embodiments, user input regarding network troubleshooting advice 3114 and network setup advice 3115 may be gathered through user interface 3I30. User interface 3130 can be implemented on networking hardware element 3100, or externally through one of computer network elements 1010 coupled to networking hardware element 3100.

Networking hardware element 3100 can select the network troubleshooting advice 3114 and network setup advice 3115 for display 3110 through an advice selection mechanism 3120. Advice selection mechanism 3120 can be implemented through software, firmware, or hardware, or through a combination of these approaches, locally in networking hardware element 3100 or via one of computer network elements 1010 coupled to networking hardware element 3100. In the same or a different embodiment, advice selection mechanism 3120 can be a subpart of network diagnostic mechanism 2140. Networking hardware element 3100 can be configured to select proper network troubleshooting advice 3114 or network setup advice 3115 via advice selection mechanism 3120, based on interaction with the user, or based on computer network information gathered via network diagnostic mechanism 2140.

In the same or a different embodiment, networking hardware element 3100 is capable of interpreting input from a user responding to network troubleshooting advice 3114 and/or network setup advice 3115 displayed on display 3110, and then causing display 3110 to display an additional network troubleshooting advice 3116 and/or network setup advice 3117. In a different embodiment, display 3110 displays the additional network troubleshooting advice 3116 and/or network setup advice 3117 in response to network diagnostic mechanism 2140 identifying a change in the connection status of one or more of computer network elements 1010 (FIG. 1).

In the same or a different embodiment, networking hardware element 3100 is further capable of indicating on display 3110 which of representations 2112 of computer network elements 1010 correspond to network troubleshooting advice 3114 or network setup advice 3115. This indication can be done by causing corresponding representations 2112 to blink or change colors, or by otherwise making display 3110 point to or illustrate corresponding representations 2112.

The network setup and/or trouble shooting advice can also include additional network advice such as, for example, turning on or off a wireless local area network ("WLAN'') radio in networking hardware element 3100, toggling or otherwise modifying or adjusting a power output of the WLAN radio, modifying an antenna configuration of the networking hardware element, minimizing noise and interference with the antenna, and/or dedicating at least one of the one or more wireless channels to one or more clients.

As an example, the WLAN' radio can be turned on or off by using a manual switch on networking hardware element 3100 or by using a touch screen switch on display 3110. In this embodiment, networking hardware element 3100 can include a WLAN radio and speakers to play the songs. The speakers can be built into element 3100, or they can be wireless speakers. In another embodiment, networking hardware element 3100 can include the WLAN radio and a wireless headset, but no built-in speakers. Display 3110 can also permit the user to select the WLAN radio channel. In an embodiment where networking hardware element 3100 is a wired and wireless router, the user can turn the WLAN radio off and continue to use networking hardware element 3100 as a wired router.

Furthermore, the network setup and/or troubleshooting advice can recommend one or more antenna configurations to optimize or at least improve the wireless network performance, and the user can choose to implement the recommended antenna configuration. The antenna configuration can be based on the location of networking hardware element 3100 relative to the locations of computer network elements 1010 (FIG. 1). As an example, when networking hardware element 3100 is a wireless router used in an apartment, the antennae configuration can be modified to prevent neighbors in the apartment building from using the network and to avoid interfering with a neighbor's wireless network. In an embodiment where network hardware element 3100 includes two, three, or more physically adjustable antennae, the advice can provide options or otherwise recommend a physical antennae configuration to optimize the wireless performance of network hardware element 3100. In the same or a different embodiment, the advice can include a recommendation for an electronic antenna configuration, including a recommendation on how to adjust the electronic settings for the antenna(e) and a menu or panel to permit the user to make the adjustments.

Additionally, the advice can recommend that each wireless channel or band be dedicated to a single client, or that a particular user-selected channel or band be dedicated to all clients. For example, the advice can recommend the user to set the wireless band for networking hardware element 3100 to be 2.4 GigaHertz (GH2) or 5 GHz. In one embodiment, the 5 GHz band or a higher band, in general, can be used when some or all of the clients are operating at a higher bandwidth such as for example, gaming and video streaming clients. In the same embodiment, the 2.4 GHz band or a lower band, in general, can be used for lower bandwidth clients. The advice can also recommend techniques to reduce potential noise and/or interference after networking hardware element 3100 scans for such noise and/or interference. For example, element 3100 can recommend to switch to a different wireless channel or band that has less noise and interference.

In the same or different embodiment, the additional network advice can include setting the quality of service by application or client, one or more technical support telephone numbers, a troubleshooting wizard, and/or Microsoft SideShow support. As an example, when advising about the quality of service, networking hardware element 3100 can provide an option or otherwise recommend that the administrative client has first priority at all times. Additionally, networking hardware element 3100 can receive updated technical support telephone numbers automatically from Internet 1600 through modem 1500 using new firmware and/or from a Really Simple Syndication ("RSS") radio or Internet feed.

Furthermore, in the same or different embodiment, the additional network advice can include a Security query, technique, or mechanism, such as having display 3110 of networking hardware element 3100 show a security code, key, or other password and requiring a user to enter the security code, key, or other password on a user interface of the client (e.g., a wireless computer 1200) before the client can logon or otherwise use networking hardware element 3100. As an example, this advice can include a "PIN" for the Windows Rally connection setup, instructions for hard or soft wireless provisioning services (WPS) push button, and/or the handling of a Windows ConnectNow thumb drive method. Networking hardware element 3100 can provide different passwords for different purposes or clients.

Each of the network setup advice, the network troubleshooting advice, and the additional network advice can be triggered by information or other output from network diagnostic mechanism 2140. Also, each of the network setup advice, the network troubleshooting advice, and the additional network advice can be provided to networking hardware element 3110 wirelessly and/or can be stored within a memory device in networking hardware element 3100.

In the same or different embodiment, display 3110 can also show additional information such as, for example, the current time, the current date, a calendar, a weather forecast, one or more news reports, one or more stock quotes, and/or one or more sports scores. As an example, display 3110 can show the time as a digital clock and/or as an analog clock. Additionally, the date can be shown in a calendar format and/or in a different format. Furthermore, the weather forecast can be for the current day and/or for the next several days.

The additional information can also include one or more of an email ticker and an instant message ("IM") ticker. As an example, display 3110 can flash or otherwise display an icon indicating that a user who is logged on to the network has a new email or IM. Optionally, display 3110 can also display some basic information about the new email or IM such as, for example, the identity of the sender and/or the subject line of the email. In response, the user can check her email or instant message on one of computer network elements 1010 such as, for example, a computer.

Furthermore, the additional information can include the available storage space, the used storage space, and/or the total storage space on a memory device coupled directly to networking hardware element 3100. As an example, the memory device can be a flash drive or an external universal serial bus ("USB") hard disk drive ("HDD") that is plugged into a USB port in networking hardware element 3100. In this embodiment, networking hardware element 3100 can also be a server so that a computer or client does not need to be logged into networking hardware element 3100 in order for networking hardware element 3100 to provide the additional information or the advice described previously. Additionally, in this embodiment, a first client logged into network hardware element 3100 can save their data and other files to the memory of network hardware element 3100 so that other clients can access the data and other files even after the first client logs off of network hardware element 3100.

The additional information can further include an Internet radio channel, along with information regarding the song(s) currently playing, previously played, and/or about to be played on the Internet radio channel. The information regarding the songs can include the song title, album, track number on the album, artist, total time, time remaining, and/or time elapsed. In this embodiment, networking hardware element 3100 can include an Internet radio and speakers to play the songs. The speakers can be built into element 3100, or they can be wireless speakers. Display 3110 can also permit the user to select the Internet radio channel.

The additional information does not include the network setup advice, the network troubleshooting advice, the additional network advice, or the network information, and the additional information can be based on information separate from the output of network diagnostic mechanism 2140. Additionally, in one embodiment an RSS feed can be used to provide the additional information to networking hardware element 3100, and in another embodiment, one or more of computer network elements 1010 (with or without an RSS feed) can provide the additional information to networking hardware element 3100. Display 3110 can show the additional information statically or dynamically as one or more constantly or periodically streaming banners of information. When display 3110 show the information as two or more streaming banners, some or all of the banners can be streaming at the same or different rates. When display 3110 shows the information statically, a user of networking hardware element 3100 can use user interface 3130 to scroll through the information on display 3110. Alternatively, a user can use a scroll bar on display 3110, which can be a touch screen. In the same or different embodiment, display 3110 can display the additional information simultaneously with network information set 2113 and/or advice 3114, 3115, 3116, and 3117, or display 3110 can display the additional information only when display 3110 does not show network information set 2113 and/or advice 3114, 3115, 3116, and 3117.

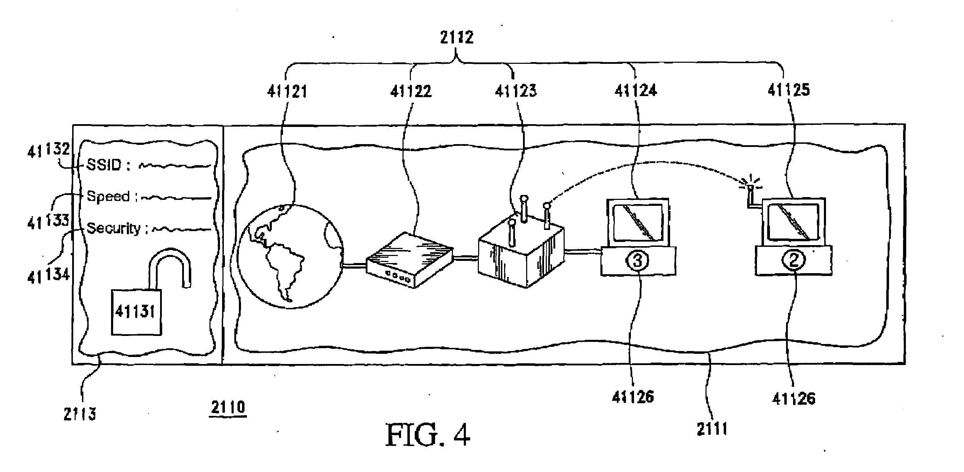

FIG. 4 illustrates display 2110 of networking hardware elements 1100 and 3100, from FIGs. 2 and 3, respectively. As illustrated in FIG. 4, display 2110 comprises network layout map 2111, which includes representations 2112 of computer network elements 1010 on computer network 1000, and the connection status of computer network elements 1010.

Network layout map 2111 in display 2110 illustrates a set of computer network element representations 2112, which can include an Internet connection representation 41121, a modem representation 41122, a networking hardware element representation 41123, a wired computer representation 41124, and a wireless computer representation 41125, along with representations for interconnections between computer network elements 1010.

In the same or a different embodiment, a first one of representations 2112 represents a plurality of one type of computer network elements 1010, For instance, wired computer representation 41124 can represent a set of one of more computers mechanically connected via wire or cable to computer network 1000 via networking hardware element 1100. Similarly, wireless computer representation 41125 can represent a set of one or more computers connected wirelessly to computer network 1000 via networking hardware element 1100.

In the same or a different embodiment, representations 2112 can further indicate the quantity of the plurality of computer network elements 1010 they represent. This quantity indication can be accomplished, for instance, through computer network element counters 41126 corresponding to particular ones of representations 2112.

In the same or a different embodiment, display 2110 can also comprise a network information set 2113, which can present information about computer network 1000 such as a network security indicator 41131, a service set identifier 41132, a network speed 41133, and a network security standard 41134. In one embodiment where the networking hardware element is a wireless router, network speed 41133 includes the maximum, actual, and/or historical wireless network speed. Display 2110 can also show the wireless network speed per wireless channel and/or client. In a different embodiment where the networking hardware element is a wired router, network speed 41133 includes the maximum, actual, and/or historical wired network speed. In another embodiment, network speed 41133 includes both the wireless network speed and the wired network speed. In the same or a different embodiment, network speed 41133 can be displayed as a digital number and/or as an analog speedometer.

Furthermore, network information set 2113 can also include other network information such as, for example, a guest service set identifier. In one embodiment, the guest service set identifier is for a guest user who does not have access to settings for the networking hardware element or to other computers logged in to the network, and service set identifier 41132 is for an administrative user who has access to all aspects of the network. The other network information and other parts of network information set 2113 does not include the network setup advice, the network troubleshooting advice, or the additional network advice. The other network information and other parts of network information set 2113 can be based on information or other output from network diagnostic mechanism 2140.

The other network information can also include an alarm indicating when an unauthorized user attempts to use or log on to the networking hardware element. In one example, a computer hacker or other unauthorized person may attempt to use networking hardware element 1100 and/or 3100 by trying to log on to the networking hardware element. Under these circumstances, display 2110 can show or display a counter indicating the number of unauthorized attempts to log on to the networking hardware element The number of unauthorized attempts can be an aggregate number or a number for each unauthorized user. Display 3110 can even show the Internet Protocol ("IP") address or other identifier of the computer hacker or unauthorized person.

Network information set 2113 can also include other network information such as the actual and/or maximum Internet connection speed, the network usage time, the network traffic type, the network traffic load, one or more IP addresses of the networking hardware element and/or the clients connected to the networking hardware element, the wireless channel(s) being used by the networking hardware element, an Internet firewall on/off status, and/or a guest security key, code, or other password. As an example, the network traffic type can be video, graphics, photographs, voice, and/or data, and the network traffic type can be shown as a pie chart, as a line graph over time, or in another format. Furthermore, display 2110 can show one or more of these types of network information as an aggregate number and/or by client. As another example, the guest security key can be different from the standard security key, and a guest client who logs into the networking hardware element by using the guest security key can have a different set of user privileges and can be restricted to access only a portion of the network. As a further example, the guest security key can limit the guest user to full local area network gaming access. The networking hardware element can display simultaneously the guest and standard security keys, codes, or other passwords.

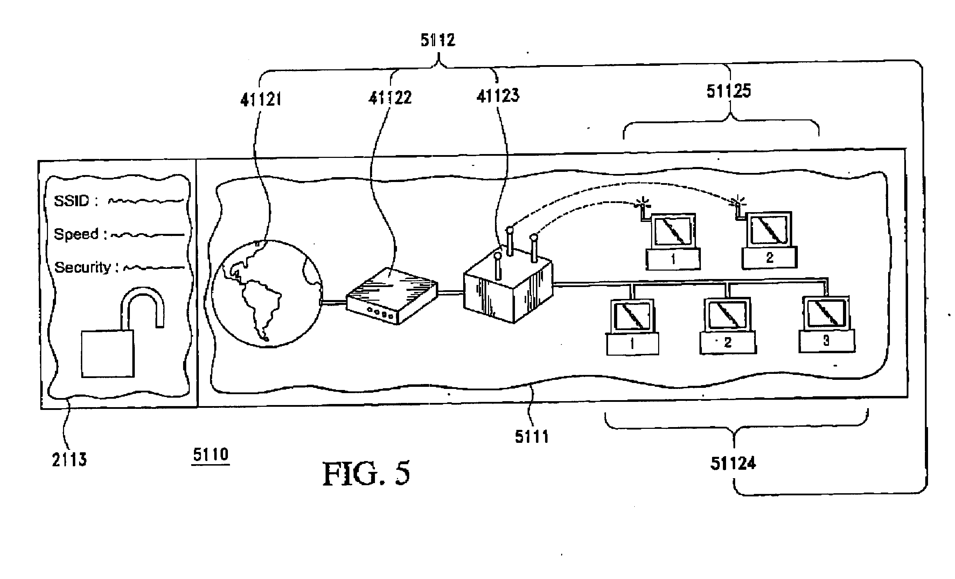

FIG. 5 illustrates a display 5110, which is a different embodiment of display 2210 illustrated in FIG. 4. Display 5110 comprises a network layout map 5111 that includes representations 5112 of computer network elements 1010. Network layout map 5111 and representations 5112 in FIG. 5 are similar to network layout map 2111 and representations 2112 in FIGs. 2, 3, and 4. However, in the embodiment of FIG. 5, each of representations 5112 can represent only an individual one of computer network elements 1010, rather than being able to represent a plurality of one type of computer network elements 1010. As a result, there could be one or more representations 5112 on display 5110 for the same type of computer network element 1010.

For instance, if there were two wired computers 1300 (FIG. 1) and three wireless computers 1200 (FIG. 1) coupled to computer network 1000, then two wired computer representations 51124 and three wireless computer representations 51125 would be indicated on network layout map 5111.

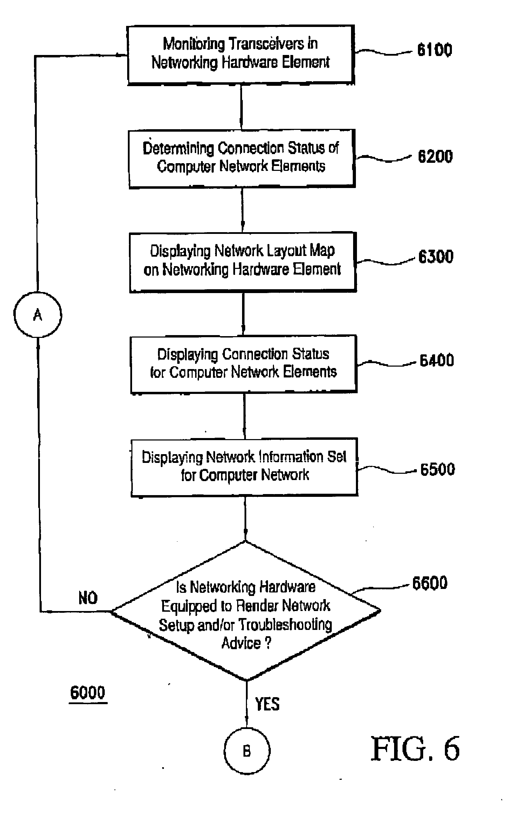

FIG. 6 illustrates a flowchart of a method 6000 for displaying a network layout map on a networking hardware element.

A step 6100 of method 6000 involves monitoring for computer network elements through transceivers in a networking hardware element. The monitoring of step 6100 can be performed by iteratively scanning for communication signals from computer network elements, which are coupled to the networking hardware element, or which are otherwise present in a computer network.

As an example, the networking hardware element in step 6100 can be networking hardware element 1100 of FICs. 1 and 2, or networking hardware element 3100 of FIG. 3. In the same or a different example, these same networking hardware elements can perform step 6100 in FIG. 6 for a computer network, such as computer network 1000 (FIG. 1), by scanning for computer network elements, such as computer network elements 1010 (FIG. 1), through network diagnostic mechanism 2140, as described in FIG. 2.

Returning to FIG. 6, a step 6200 of method 6000 involves determining a connection status for any of the computer network elements coupled to the networking hardware element. This step can be accomplished, for example, by processing information gathered in step 6100 from monitoring transceivers in the networking hardware element. In the same or a different example, determining the connection status can be accomplished through a mechanism such as network diagnostic mechanism 2140, as described in FIG. 2. In the same or a different example, steps 6100 and 6200 of method 6000 can be subparts of a single step.

A step 6300 of method 6000 in FIG. 6 involves displaying a network layout map by showing the computer network elements present in the computer network and the interconnections between the computer network elements- The network layout map can be based on information gathered in step 6200 about the computer network elements and about the connection status of the computer network elements. As an example, step 6300 can produce a network layout map on a display similar to network layout map 2111 on display 2110 in FIGs. 2 and 4, and/or similar to network layout map 5111 on display 5110 in FIG. 5.

A step 6400 of method 6000 in FIG. 6 involves displaying a connection status for the computer network elements displayed on network layout map of step 6300. As an example, the connection status of the computer network elements can be indicated, as described in FIG. 2 and FIG. 3, such as by causing any appropriate ones of representations 2112 to blink or change colors, or by otherwise making display 2110 point to any appropriate ones of representations 2112. In the same or a different example, steps 6300 and 6400 of method 6000 can be subparts of a single step, or their sequence can be reserved.

In the same or a different example, a step 6500 of method 6000 involves displaying a network information set The information to be displayed can be determined, for instance, by processing the information gathered in step 6100 from monitoring the transceivers in the networking hardware element. As an example, the network information set can be indicated as illustrated by network information set 2113 from FIG. 4. In the same or a different example, steps 6300, 6400, and 6500 of method 6000 can be subparts of a single step, or their sequence can be changed.

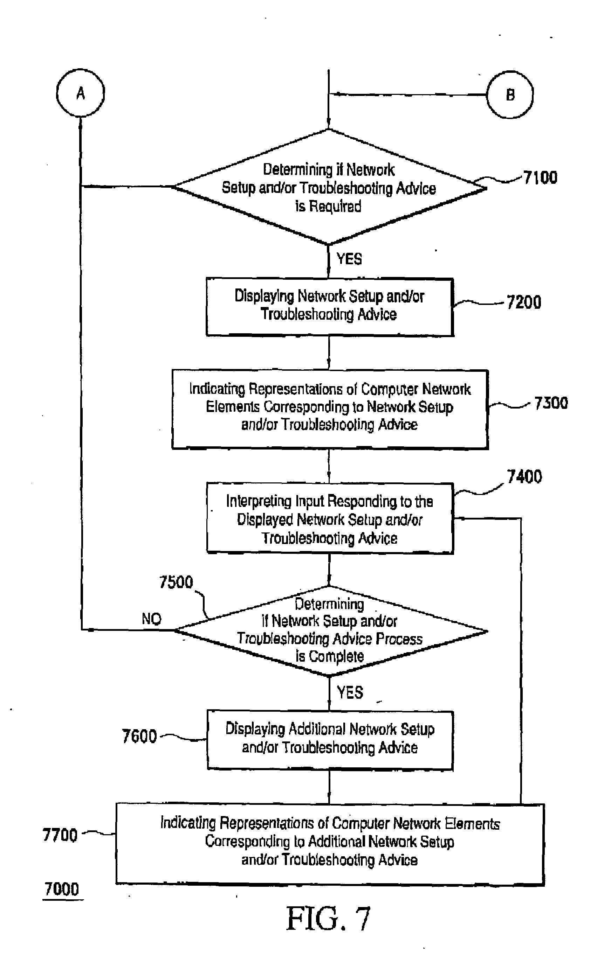

In the same or a different example, a decision step 6600 of method 6000 involves determining whether the networking hardware element is equipped to render a network setup and/or troubleshooting advice to a user. In one example, the network setup and/or troubleshooting advice can be as described for network troubleshooting advice 3114 and/or network setup advice 3115 in FIG. 3. If the networking hardware element is not equipped to provide the network setup and/or troubleshooting advice, then method 6000 proceeds along a path "A", which repeats method 6000 at step 6100. If the networking hardware element is equipped to provide the network setup and/or troubleshooting advice, then method 6000 proceeds along a path "B", which continues method 6000 as a method 7000, as shown hereinafter in FIG. 7.

FIG. 7 illustrates a flowchart of method 7000 for displaying a network setup and/or troubleshooting advice on a networking hardware element.

In one example, the network setup and/or troubleshooting advice can encompass both setup advice and troubleshooting advice, such as network setup advice 3115 and network troubleshooting advice 3114 (FIG. 3). In a different example, network setup and/or troubleshooting advice can encompass only setup advice. In a different example, network setup and/or troubleshooting advice can encompass only troubleshooting advice,

A step 7100 of method 7000 involves determining whether displaying of network setup and/or troubleshooting advice on networking hardware element is required. In one example, step 7100 is reached from path "B" from FIG. 6. If the network setup and/or troubleshooting advice is not required, then method 7000 ends, and the process proceeds along path "A" to step 6100 of method 6000 (FIG. 6). If the network setup and/or troubleshooting advice is required, then method 7000 continues with a step 7200.

As an example, determining in step 7100 whether the network setup and/or troubleshooting advice is required can be done via an advice selection mechanism and/or a network diagnostic mechanism in the networking hardware element, such as advice selection mechanism 3120 (FIG. 3) and/or network diagnostic mechanism 2140 (FIGs. 2 and 3) in networking hardware element 3100 (FIG. 3). In one example, the advice selection mechanism can select the proper network setup and/or troubleshooting advice based on information gathered during steps 6100 and 6200 from FIG. 6, as related to the connection status of the computer network elements in the computer network In the same or a different example, the advice selection mechanism can select the proper network setup and/or troubleshooting advice based on interpreting a user input or request entered, such as described for user interface 3130 on FIG. 3.

A step 7200 of method 7000 in FIG. 7 involves displaying the network setup and/or troubleshooting advice, as determined in step 7100, on the networking hardware element. As an example, step 7200 can be accomplished on the networking hardware element through a display like display 3110 for network setup advice 3115 and network troubleshooting advice 3114 (FIG. 3).

Next, a step 7300 of method 7000 in FIG. 7 comprises indicating on the networking hardware element any representations of the computer network elements corresponding to the network setup and/or troubleshooting advice displayed per step 7200. As an example, step 7300 can be implemented as described for FIG. 3 by causing corresponding representations 2112 to blink or change colors, or by otherwise making display 3110 point to or illustrate corresponding ones of representations 2112. In a different embodiment, method 7000 skips or omits step 7300 such that step 7200 proceeds directly to step 7400.

A step 7400 of method 7000 in FIG. 7 comprises interpreting input responding to the network setup and/or troubleshooting advice displayed. In one example, the input can be entered by a user, such as described for user interface 3130 (FIG. 3). In the same or a different example, the input can be received automatically from any mechanism monitoring computer network, such as described for network diagnostic mechanism 2140 (FIGs. 2 and 3) and which can also be referred to as user input. In one embodiment, method 7010 does not include step 7010.

Then, a step 7500 of method 7000 comprises determining whether the network setup and/or troubleshooting advice process is finished, based on interpreting input received in step 7400 or based on new information determined by the network diagnostic mechanism. In one example, determining whether the network setup and/or troubleshooting advice process is finished can be done via the advice selection mechanism in networking hardware element, such as advice selection mechanism 3120 in networking hardware element 3100 (FIG. 3) or network diagnostic mechanism 2140 (FIGs. 2 and 3)- If the network setup and/or troubleshooting advice process is finished, then method 7000 ends, and the process proceeds to path "A", which repeats method 6000 (FIG. 6) in a cycle starting at step 6100 (FIG. 6). If the network setup and/or troubleshooting process is not yet finished, then method 7000 proceeds to a step 7600.

Step 7600 comprises displaying on networking hardware element an additional network setup and/or troubleshooting advice. Additional network setup and/or troubleshooting advice can be selected based on the interpretation, in step 7400, of input that responded to the network setup and/or troubleshooting advice displayed previously. As an example, step 7600 can be accomplished on a networking hardware element through an advice selection mechanism, such as advice selection mechanism 3120 in networking hardware element 3100, as described for both additional network setup advice 3117 and additional network troubleshooting advice 3116 (FIG. 3).

Next, step 7700 in method 7000 in FIG. 7 involves indicating on the networking hardware element any representations of the computer network elements corresponding to the displayed additional network setup and/or additional troubleshooting advice of step 7600. As an example, step 7700 can be implemented as described for FIG. 3 by causing corresponding representations 2112 to blink or change colors, or by otherwise making display 3110 point to or illustrate corresponding ones of representations 2112. In a different embodiment, method 7000 skips or omits step 7700. In another embodiment, steps 7400, 7500, 7600, and 7700 can be subparts of a single step.

Upon completion of step 7700, method 7000 proceeds back to step 7400, waiting to interpret input responding to the network setup and/or troubleshooting advice displayed. Steps 7400 - 7700 repeat until the network setup and/or troubleshooting advice process is finished, as determined in step 7500. When network setup and/or troubleshooting advice process is finished, method 7000 proceeds from step 7500 to path "A", which repeats method 6000 in a cycle starting at step 6100.

Although the invention has been described with reference to specific embodiments, it will be understood by those skilled in the art that various changes may be made without departing from the scope of the invention. For example, the invention is not limited to a wireless network context, and need not serve as a wireless network user interface, but may find utility in any context in which a computer system or a similar system must be monitored and/or managed. Similarly, the content and arrangement of the various screen displays can vary widely from the particular embodiments shown in the figures yet still fall within the scope of the invention. Accordingly, the disclosure of embodiments of the invention is intended to be illustrative of the scope of the invention and is not intended to be limiting. It is intended that the scope of the invention shall be limited only to the extent required by the appended claims. For example, to one of ordinary skill in the art, it will be readily apparent that the methods discussed herein may be implemented in a variety of embodiments, and that the foregoing discussion of certain of these embodiments does not necessarily represent a complete description of all possible embodiments. As a specific example, in FIG. 7, step 7300 could occur before step 7200. Accordingly, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. A networking hardware element to couple together computer network elements, comprising:
a network diagnostic mechanism; and
an electronic display electrically coupled to the network diagnostic mechanism and capable of:
displaying network information; and
displaying additional information.

2. The networking hardware element of claim 1, wherein:
the networking hardware element is selected from the group consisting essentially of:
a router;
a hub;
a switch;
a wireless network access point; and
a wireless networking card.

3. The networking hardware element of any of the preceding claims, wherein:
the network information is selected from the group consisting essentially of
a network layout map;
a network security indicator;
a service set identifier;
a guest service set identifier;
a wired network speed;
a wireless network speed;
a wireless channel;
a network security standard,
an unauthorized user alarm;
a counter indicating a number of unauthorized user attempts;
an actual Internet connection speed;
a maximum Internet connection speed;
a network usage time;
a network traffic type;
a network traffic load;
an Internet Protocol address;
a firewall status; and
a guest security password.

4. The networking hardware element of any of the preceding claims, wherein:
the additional information is selected from the group consisting essentially of:
a time;
a date;
a calendar,
a weather forecast;
a news report;
a stock quote;
a sports score;
an email ticker,
an instant messenger ticker;
a radio channel;
information regarding a song played on the radio channel;
an available storage space on a memory device;
a used storage space on the memory device; and
a total storage space on the memory device.

5. The networking hardware element of any of the preceding claims, further comprising:
speakers,
wherein:
the additional information is selected from the group consisting essentially of:
a radio channel; and
information regarding a song played from the radio channel and on the speakers.

6. The networking hardware element of claim 1, 2, 3, or 4, further comprising:
a memory device;
wherein:
the additional information is selected from the group consisting essentially of:
an available storage space on a memory device;
a used storage space on the memory device; and
a total storage space on the memory device.

7. The networking hardware element of any of the preceding claims, wherein:
the electronic display is capable of displaying network setup advice.

8. The networking hardware element of any of the preceding claims, wherein:
the electronic display is capable of displaying network troubleshooting advice.

9. A method of displaying information on a networking hardware element coupling together computer network elements, the method comprising:
displaying on the networking hardware element:
network information; and
additional information.

10. The method of claim 9, further comprising:
displaying on the networking hardware element:
network advice.
